# EUROPÄISCHE PATENTANMELDUNG

(11) **EP 1 180 749 A1**
(43) Veröffentlichungstag der Anmeldung: **20.02.2002**
(21) Anmeldenummer: 00117811.0
(22) Anmeldetag: 18.08.2000
(51) Int. Cl.: G07F 7/10, G07F 19/00

(54) **Verfahren und Anordnung zur Übertragung eines elektronischen Geldbetrages aus einem Guthabenspeicher**

(71) Anmelder: SIEMENS AKTIENGESELLSCHAFT, 80333 München (DE)
(72) Erfinder: Wolf, Hans-Hermann, 81829 München (DE)

(57) **Zusammenfassung**

Verfahren zur Übertragung eines elektronischen Geldbetrages aus einem Guthabenspeicher eines Geldsenders auf ein Konto bzw. in einen Guthabenspeicher eines Geldempfängers über ein Telekommunikations- und Datennetz in Echtzeit.

## Beschreibung

Die Erfindung betrifft ein Verfahren sowie eine Anordnung zur Übertragung eines elektronischen Geldbetrages aus einem Guthabenspeicher auf ein Konto bzw. in einen anderen Guthabenspeicher über ein Telekommunikations- und Datennetz.

Das Internet gewinnt - neben der Nutzung als Kommunikationsmittel und Informationsquelle für mittlerweile Hunderte von Millionen Menschen - zunehmend an Bedeutung als Einkaufsquelle. Insbesondere der Handel mit Software, Büchern und Reisen läuft heute bereits zu einem nennenswerten Anteil im Internet ab, zunehmend wird aber auch ein breites Spektrum sonstiger Waren und Dienstleistungen über das Internet bestellt und bezahlt. Die Bezahlung der entsprechenden Leistungen im Internet auf die ursprünglich etablierte und heute noch meist verbreitete Weise erfordert die jeweils gesonderte Eingabe der relevanten Datensätze zumindest bei jedem Geschäftspartner, wenn nicht sogar für die einzelne Transaktion. Diese Zahlungsweise gibt damit dem Geschäftspartner Einblick in sen-sible persönliche Daten und sogar die Möglichkeit ihrer dauerhaften Speicherung.

Auch für die Abwicklung sonstiger Zahlungsvorgänge im geschäftlichen wie im privaten Bereich hat das Internet inzwischen erhebliche Bedeutung erlangt. Nahezu alle Banken in den Industrieländern bieten als "Electronic Banking" die elektronische Abwicklung der Kontoführung und von Zahlungsvorgängen an.

Gleichwohl erfolgt die Mehrzahl der Zahlungsvorgänge des täglichen Lebens auch heute noch per Bargeld oder durch schriftliche Erteilung von Überweisungs- oder Einzugsaufträgen o. ä. oder bei Kredit- bzw. Scheckkarte. Auf speziellen Gebieten, etwa dem der Mobilfunktechnik, haben auch elektronische Guthaben (sog. "Prepaid-Karten") Bedeutung erlangt, einer breiten Einführung dieses Zahlungsmittels stehen aber erhebliche Hindernisse im Wege.

Insgesamt ist festzustellen, daß beim derzeitigen Stand der Entwicklung eine höchst unübersichtliche Vielzahl von Möglichkeiten der Bezahlung von Waren oder Dienstleistungen besteht, deren Handhabung im täglichen Leben erhebliche Aufmerksamkeit und den Umgang mit den verschiedensten Medien bzw. Eingabemodi erfordert. Das ist lästig und zudem mit vielfältigen Sicherheitsrisiken (Verlust von Daten- bzw. Guthabenträgern, Vergessen von Kontendaten bzw. Authentisierungscodes etc.) verbunden.

Neben dem Internet stellt die Telekommunikation - insbesondere die mobile Telekommunikation - heute ein Gebiet mit rasanter technischer und wirtschaftlicher Entwicklung und eine wesentliche Quelle wirtschaftlichen Wachstums und neuer sozialer Entwicklungen dar. Für einen Großteil der Menschen in den Industrieländern wird das Mobiltelefon ("Handy") mehr und mehr zu einem universellen Kommunikations- und Informationsinstrument und auch zunehmend für den Zugriff auf Waren und Dienstleistungen genutzt. Auch diese Entwicklung wird noch durch unzureichende Möglichkeiten für eine sichere und zugleich einfache Bezahlung von über das Handy bestellten Informationen, Waren und Dienstleistungen behindert.

Zwar gibt es Lösungen, die dem Nutzer eines Handys - mit oder ohne Prepaid-Karte - die Autorisierung von Zahlungen ermöglichen, welche anschließend auf an sich konventielle Weise per Lastschriftverfahren oder Kreditkarten-Abbuchung abgewickelt werden. Diese Verfahren setzen jedoch, wie auch die im Internet inzwischen eingebürgerten Zahlungsabwicklungen, die Kreditwürdigkeit des Käufers und die Verfügungsbefugnis über eine Kreditkarte oder ein Girokonto mit Dispositionskredit voraus. Zudem wohnen diesen Verfahren zeitliche Verschiebungen inne, die sich nachteilig auf die Transparenz und Zuverlässigkeit der Gesamtabwicklung auswirken.

Der Erfindung liegt daher die Aufgabe zugrunde, ein Verfahren und eine Anordnung zur vereinfachten Abwicklung von Zahlungsverkehr unter Nutzung eines Datennetzes anzugeben.

Diese Aufgabe wird hinsichtlich ihres Verfahrensaspektes gelöst durch ein Verfahren mit den Merkmalen des Anspruchs 1 und hinsichtlich ihres Vorrichtungsaspektes durch eine Anordnung mit den Merkmalen des Anspruchs 8.

Die Erfindung schließt den wesentlichen Gedanken ein, ein weitgehend universelles Zahlungsverfahren auf der Grundlage eines elektronischen Guthabens (Prepaid-Konto bzw. -Karte) anzugeben, welches für eine Zahlungsabwicklung im sogenannten B2C(Business-2-Consumer)-Bereich wie auch im C2C(Consumer-2-Consumer)-Bereich anwendbar ist, also sowohl den Einkauf in realen und virtuellen Geschäften, die Bezahlung in gastronomischen oder kulturellen Einrichtungen, an Warenausgabeautomaten etc. als auch die "Übersendung" von Geldbeträgen im privaten Bereich ermöglicht. Sie schließt weiter den Gedanken ein, hierzu die Möglichkeiten eines verknüpften Telekommunikations- und Datennetzes zu nutzen, und zwar insbesondere die Möglichkeit einer Abwicklung in Echtzeit (Real Time).

Unter einem elektronischen Guthaben wird hier ein Speicherinhalt eines über ein Telekommunikations- bzw. Datennetz zur Durchführung von Zahlungsverkehr handhabbaren Guthabenspeichers verstanden - grundsätzlich unabhängig davon, ob der Speicher tatsächlich ein vorausbezahltes Guthaben aufweist oder ein Guthabenbetrag erst zu einem späteren Zeitpunkt transferiert wird.

Kernstück der vorgeschlagenen Anordnung und des vorgeschlagenen Verfahrens ist ein Transaktions-Server, der auf eine Transaktions-Datenbasis zugreift, in der die für eine Übertragung von Prepaid-Guthaben relevanten Daten gespeichert sind. Initiiert wird der Übertragungsvorgang durch einen Anruf des Geldsenders bei einer eigens zu diesem Zweck eingerichteten Rufnummer des Geldempfängers. Diese Rufnummer ist in der Transaktions-Datenbasis gespeichert und dient gewissermaßen als Adresse eines für den Geldübertragungsvorgang relevanten Geldempfänger-Datensatzes.

Ein wesentliches Merkmal einer bevorzugten Ausführung der Erfindung besteht darin, daß der zu übertragende Geldbetrag seitens des Geldsenders an seinem Endgerät eingegeben wird. Dies kann auch in der zweiten Phase eines Ablaufes geschehen, bei dem zunächst die Rufnummer des Geldsenders eingegeben und angewählt und der Geldsender über eine Ansage oder Menüführung aufgefordert wird, den Geldbetrag einzugeben. Auf diese Aufforderung hin nimmt er dann die relevante Eingabe vor.

Ein sogenannter "Switch" des Geldsenders - speziell ein Trigger im HLR (Home Location Register) bei einem Mobilfunknetz - stellt eine Anfrage an einen Server (z. B. den SCP = Service Control Point eines intelligenten Netzes), wie dieser Ruf ausgeführt werden soll. Anhand der Rufnummer wird erkannt, daß es sich nicht um einen normalen Anruf für den Teilnehmer, sondern um einen speziellen Anruf zur Abwicklung einer Geldübertragung handelt. Diese Spezifikation kann in einem Abschnitt der Rufnummer verschlüsselt sein, oder sie wird aufgrund dessen deutlich, daß durch den Server "probeweise" ein Zugriff auf die Transaktions-Datenbasis ausgeführt wird und dieser Zugriff erfolgreich ist.

Das vorgeschlagene Verfahren bietet als Echtzeitverfahren eine gegenüber bekannten Zahlungsabwicklungsverfahren verbesserte Transparenz und Zuverlässigkeit und ist insbesondere auch von Personen nutzbar, denen kein Kreditrahmen gewährt wird. Der Nutzer muß lediglich über ein vorausbezahltes Guthaben verfügen, das eine für die vorgesehene Geldübertragung ausreichende Deckung gewährleistet.

In der nachfolgenden Beschreibung und den Patentansprüchen wird der Inhaber des Prepaid-Guthabens, der einen Geldbetrag übertragen möchte und in einem (realen oder virtuellen) Geschäft als Käufer und in einer gastronomischen Einrichtung als Gast in Erscheinung tritt, allgemein als "Geldsender" bezeichnet. Der Empfänger des zu übertragenden Geldbetrages, bei dem es sich im täglichen Leben zumeist um den Inhaber bzw. Betreiber eines Geschäftes oder einer gastronomischen oder kulturellen Einrichtung o. ä. handeln wird, wird nachfolgend allgemein "Geldempfänger" bezeichnet. Geldempfänger und Geldsender können im übrigen auch Applikationen sein.

Jeder Geldempfänger, der die Möglichkeit der Geldübertragung von Prepaid-Guthaben eines Partners auf sein eigenes Konto nutzen möchte, muß einen die Geldübertragung realisierenden Dienst subskribieren. Mit dem Subskriptionsvorgang wird ein ihn betreffender Datensatz in der Transaktions-Datenbasis ("Shopping-Datenbank") abgelegt. Das Konto des Geldempfängers muß zur Verwaltung elektronischer Guthaben geeignet sein; es kann sich hierbei insbesondere ebenfalls um ein Prepaid-Konto handeln. Der Geldempfänger kann mehrere Telefonnummern und auch mehrere Zielkonten für die Geldübertragung benutzen, wobei in diesem Fall natürlich alle einzusetzenden Telefonnummern und Konto-Identifikatoren aller Konten in der Shopping-Datenbank zu hinterlegen sind. (Mit dem Begriff "Konto-Identifikator" wird nachfolgend die Gesamtheit aus einer Kontonummer bzw. einem Kontencode und der gegebenenfalls benötigten Server-Adresse eines externen Servers verstanden, auf dem das Konto verwaltet wird.) Neben den erwähnten Daten umfaßt der in der Transaktions-Datenbasis gespeicherte Geldempfänger-Datensatz zweckmäßigerweise auch einen Namen bzw. Firmennamen.

Neben den Informationen zum Geldempfänger enthält die Shopping-Datenbank bevorzugt auch die zur Durchführung der Geldübertragung erforderlichen Informationen bezüglich des Geldsenders. Dieser Geldsender-Datensatz enthält zweckmäßigerweise die Kontonummer seines Prepaid-Kontos und erforderlichenfalls die Serveradresse eines externen Servers, auf dem das Prepaid-Guthaben verwaltet wird (auch hier nachfolgend gelegentlich als "Konto-Identifikator" bezeichnet), vorteilhafterweise auch den Server- und Betreibernamen und schließlich einen Authentisierungsdatensatz zur mindestens optionalen fallweisen Authentisierung größerer Geldtransfers. Als "Adresse" bzw. "Schlüssel" für diesen Datensatz dient zweckmäßigerweise die Geldsender-Rufnummer.

Der Geldsender-Datensatz kann auch in einer separaten Prepaid-Datenbasis hinterlegt sein.

Eine wesentliche Sicherheitskomponente stellt der bereits erwähnte Authentisierungsdatensatz innerhalb des Geldsender-Datensatzes dar. Dieser umfaßt insbesondere einen Authentisierungscode (PIN o. ä.) und/oder biometrische Daten des Geldsenders (z. B. Papillarlinien- oder Retinamuster), der bzw. die zur fallweisen Autorisierung von Geldübertragungen genutzt werden. Dieser Code bzw. diese Daten werden am Endgerät des Geldsenders oder an einem diesem zugeordneten Eingabegerät eingegeben, zum Transaktions-Server übermittelt und dort mit den entsprechenden hinterlegten Daten verglichen. Im Ergebnis des Vergleiches wird die Transaktion freigegeben oder gesperrt.

Die erwähnten Autorisierungsschritte werden in einer bevorzugten Verfahrensdurchführung bei Kleinstbeträgen nicht ausgeführt, sondern nur bei einen vorbestimmten Schwellwert übersteigenden Geldbeträgen. Dieser Schwellwert ist vorteilhafterweise durch den Dienstbetreiber oder den Geldsender selbst einstell- bzw. änderbar.

Die vorgeschlagene Lösung, die sinnbildlich auch als "Prepaid-Shopping-Anwendung" bezeichnet werden kann, umfaßt die Funktionsblöcke (1) Start des Geldübertragungsverfahrens, (2) Abbuchung beim Geldsender und (3) Aufbuchung beim Geldempfänger. Diese Funktionsblöcke können auf ein und demselben oder verschiedenen Servern ablaufen, für den bzw. die zusammenfassend der Begriff "Transaktions-Server" steht. Der oder die Server kann bzw. können zentral bei einem Dienstbetreiber oder in mehreren Hardware-Implementierungen bei diesem oder auch bei mehreren Dienstbetreibern existieren. Die Prepaid-Shopping-Anwendung hat - wie oben bereits erwähnt - Zugriff auf eine "Shopping-Datenbank", die (je nach konkretem Netz- und Anwendungskonzept) ebenfalls zentral an einer Stelle, verteilt an mehreren Stellen oder auch in mehreren Kopien an verschiedenen Stellen vorliegen kann.

Verfahren und Anordnung gestalten sich am einfachsten, wenn das Prepaid-Guthaben des Geldsenders, das Zielkonto des Geldempfängers und die Prepaid-Shopping-Anwendung selbst bei ein und demselben Dienstbetreiber verwaltet bzw. betrieben werden. Ist dies nicht der Fall, muß ein (als solches bekanntes) Clearing über die Geldübertragung stattfinden. Für diesen Vorgang können die beim Ab- und Aufbuchungsvorgang erstellten Dokumentationen, insbesondere als sogenannte Log-Records, eingesetzt werden.

Das vorgeschlagene System erbringt (neben bereits genannten Vorteilen) den wesentlichen Vorteil, daß das auf einem Prepaidkonto vorhandene elektronische Geld nicht nur für die Bezahlung einer eng spezifizierten Dienstleistung (speziell von Telefongesprächen), sondern in vielfältiger Weise für die Bezahlung von Waren, Dienstleistungen, Informationen etc. in realen wie auch in virtuellen Verkaufseinrichtungen aller Art genutzt werden kann. Über die Vorausbezahlung des Guthabens hat der Nutzer eine strenge Kostenkontrolle, und eine unbeabsichtigte Verschuldung ist prinzipiell ausgeschlossen. Damit ist dieses Verfahren besonders vorteilhaft auch für Minderjährige (oder auch für nicht mehr im vollem Besitz ihrer geistigen Kräfte befindliche ältere Menschen) einsetzbar, für die es bislang keine vergleichbare Anwendung gibt. Beim Geldempfänger ist für die Bezahlung von Waren oder Dienstleistungen verschiedener Anbieter sind nicht länger mehrere Prepaid-Karten oder -Endgeräte erforderlich, sondern nur die Speicherung einer einzigen Prepaid-Rufnummer.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Figur 1 ein stark vereinfachtes Funktions-Blockschaltbild einer ersten Ausführungsform der erfindungsgemäßen Anordnung,
Figur 2 ein stark vereinfachtes Funktions-Blockschaltbild einer zweiten Ausführungsform der erfindungsgemäßen Anordnung und

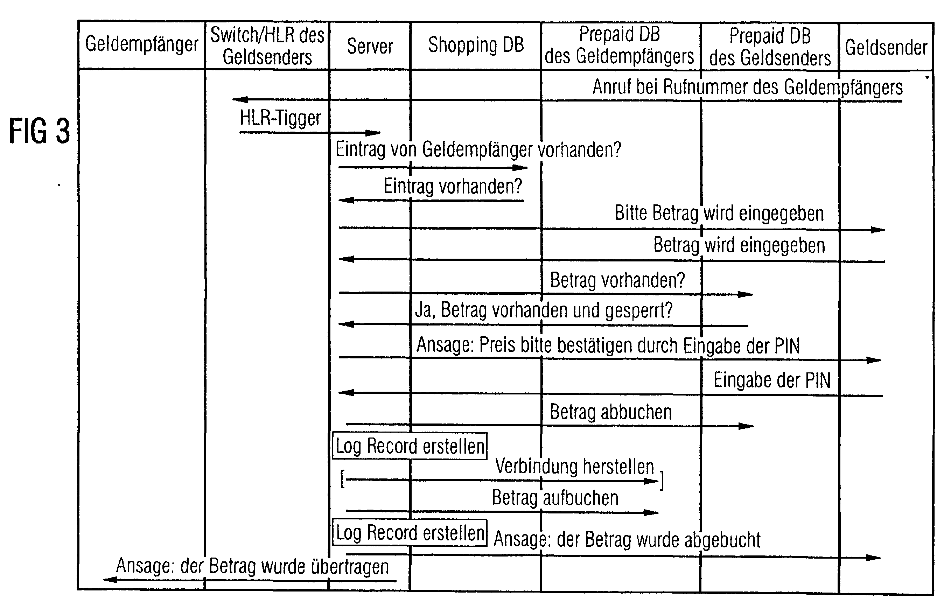

Figur 3 eine schematische Darstellung der wesentlichen Schritte der vorgeschlagenen Anwendung bei der Anordnung nach Fig. 1.

Die Figuren sind aufgrund ihrer Beschriftung im wesentlichen selbsterklärend, so daß nachfolgend keine detaillierte Figurenbeschreibung gegeben wird.

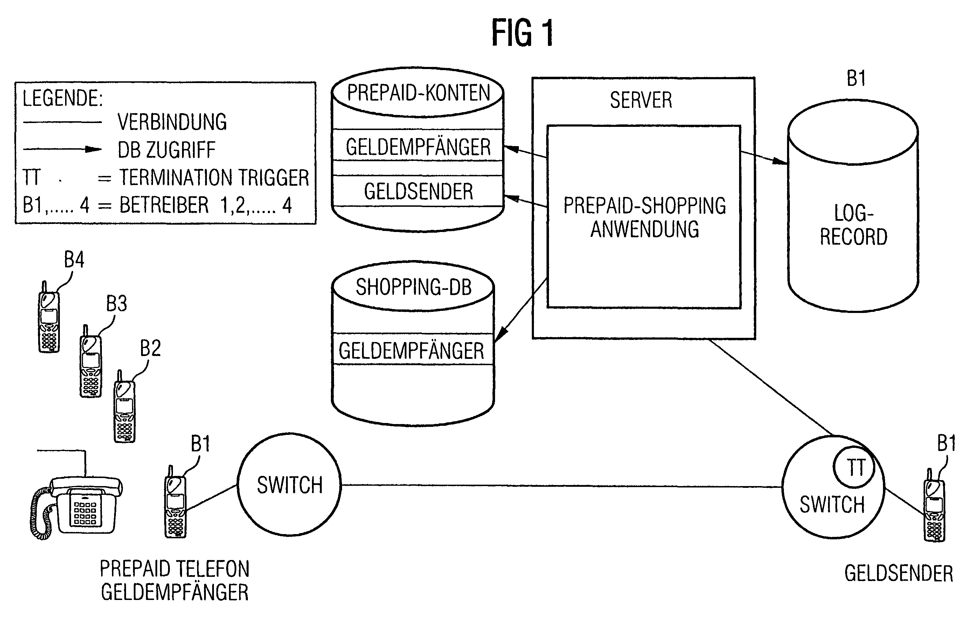

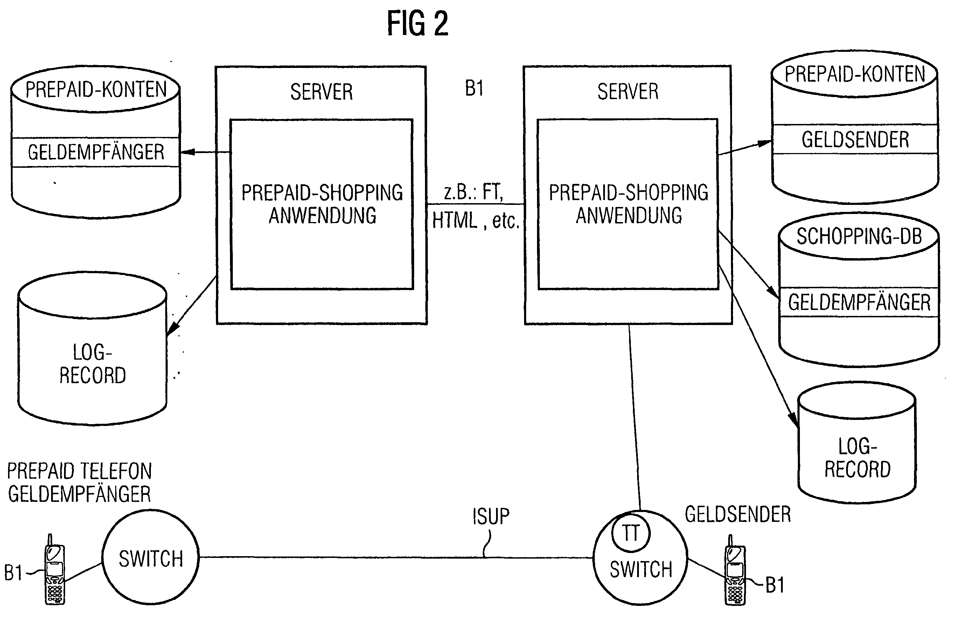

Es wird darauf hingewiesen, daß in Fig. 1 davon ausgegangen wird, daß die Prepaid-Shopping-Anwendung auf demselben Server läuft, auf dem auch Prepaid-Konten des Geldempfängers und Geldsenders geführt werden. In Fig. 2 ist dagegen der Fall dargestellt, daß Prepaid-Konten des Geldsenders und Geldempfängers auf einem anderen Server als demjenigen verwaltet werden auf dem die Prepaid-Shopping-Anwendung läuft.

Ein wesentliches Merkmal des vorgeschlagenen Verfahrens ist die Verfügbarkeit einer speziellen Transaktions-Rufnummer eines beliebigen Telekommunikations-Endgerätes eines beliebigen Betreibers (herkömmliches Telefon oder Telefon mit Prepaid-Karte in einem Mobilfunknetz oder dem Festnetz) für den Geldempfänger. Die Rufnummer ist speziell für Geldübertragungen zugewiesen und kann nicht für normale eingehende Telefongespräche genutzt werden. Ihre Zuweisung an den Geldempfänger erfolgt im Rahmen einer Subskription eines von einem Dienstbetreiber angebotenen Geldübertragungs-Dienstes. Die Rufnummer wird in einer Transaktions-Datenbasis SHOPPING DB als spezielle Geldempfänger-Rufnummer hinterlegt. (In Fig. 1 ist mit den Bezugsziffern B1 bis B4 angedeutet, daß der Geldempfänger eine Mehrzahl von Transaktions- bzw. Prepaid-Rufnummern bei verschiedenen Betreibern unterhalten kann.)

Der Geldübertragungsvorgang wird durch einen Anruf des Geldsenders bei der Transaktions-Rufnummer des Geldempfängers eingeleitet. Hierbei wird beispielsweise im Anschluß an die Rufnummer - von dieser durch einen Stern (*) abgetrennt - der zu übertragende Geldbetrag in der relevanten Währung als unstrukturierte Ziffernfolge am Endgerät des Geldsenders eingegeben. Hierzu wird insbesondere dessen Tastatur benutzt; grundsätzlich kann im Rahmen einer entsprechend ausgebildeten Menüführung aber auch eine Spracheingabe erfolgen. Es ist auch möglich, daß der Geldbetrag nicht durch den Anrufer, sondern - an einem geeigneten Punkt des Gesamtablaufes, an dem eine entsprechende Verbindung zum Transaktions-Server besteht - durch den jeweiligen Partner der Transaktion eingegeben wird.

Bei der hier angenommenen Ausführung des Geldsender-Endgerätes als Mobiltelefon wird über einen Trigger im HLR des Mobilfunknetzes eine Anfrage an den Server - speziell bei einem SCP des Mobilfunknetzes realisiert - bezüglich der Ausführung des eingeleiteten Rufes gestellt. Der Server greift mit der Transaktions-Rufnummer des Geldempfängers auf die Shopping-Datenbank zu und sucht einen der Rufnummer entsprechenden Eintrag. Wird ein Eintrag gefunden, so ist der Anruf als Anruf zur Abwicklung einer Geldübertragung spezifiziert, und es werden entsprechende Prüfungen und Folgehandlungen initiiert.

Nach Übermittlung der Daten, mit dem das Geldübertragungsverfahren gestartet ist, folgt zunächst ein Prüfungsvorgang im Hinblick darauf, ob der Datenträger gültig und der Betrag auf dem Prepaid-Konto des Geldsenders für den vorgesehenen Übertragungsvorgang ausreichend ist. Ist beides der Fall, wird der Geldsender aufgefordert, die Abbuchung des zu übertragenden Geldbetrages durch Eingabe seiner PIN zu autorisieren.

Im Rahmen des Prüfungsvorganges greift die Prepaid-Shopping-Anwendung auf die Shopping-Datenbank zu und liest den Geldempfänger-Datensatz und den Geldsender-Datensatz mit den darin enthaltenden Informationen, auf welchem Server bzw. welchen Servern (und bei welchem Betreiber bzw. welchen Betreibern) sich die Konten des Geldempfängers und Geldsenders befinden. Der Server des Geldsenders wird identifiziert, und es wird, falls es sich um einen anderen Server handelt als denjenigen, auf dem die Prepaid-Shopping-Anwendung läuft, eine Echtzeitverbindung zu einer auf diesem fremden Server laufenden Prepaid-Shopping-Anwendung aufgebaut.

An die Prepaid-Shopping-Anwendung auf dem Server des Geldsenders wird eine Aufforderung zur Prüfung übermittelt, ob das elektronische Guthaben auf dem Prepaid-Konto des Geldsenders für die vorgesehene Geldübertragung ausreicht. Ist dies nicht der Fall, wird die Übertragung mit einem entsprechenden Hinweissignal an das Endgerät des Geldsenders und/oder Geldempfängers abgebrochen. Ist der zu übertragende Geldbetrag gedeckt, wird er auf dem Prepaid-Konto des Geldsenders reserviert.

Anschließend erfolgt die erwähnte Autorisierung per Eingabe der PIN durch den Geldsender an seinem Endgerät, gegebenenfalls per SMS o. ä. Die eingegebene PIN wird mit der im Geldsender-Datensatz hinterlegten PIN verglichen. Ist sie gültig, wird der Abbuchungsvorgang eingeleitet. Ist sie ungültig, wird die Transaktion an dieser Stelle abgebrochen und wiederum ein entsprechendes Hinweissignal übermittelt.

Es folgt die Abbuchung des zu übertragenden Geldbetrages vom Prepaid-Konto des Geldsenders. Dieser Vorgang ist zeitkritisch und erfolgt in Echtzeit. Befindet sich das Prepaid-Konto des Geldsenders auf dem gleichen Server wie die Prepaid-Shopping-Applikation, kann das Guthaben sofort (in Echtzeit) um den zu übertragenden Geldbetrag reduziert werden. Befindet sich das Konto auf einem fremden Server, muß die Abbuchungsanforderung an die dortige Prepaid-Shopping-Anwendung gestellt werden, und die Abbuchung erfolgt unter deren Regime. In jedem Falle wird über den Abbuchungsvorgang ein Log-Record erstellt und der Geldempfänger über das Kassensystem oder einen Anruf oder per SMS o. ä. über die Ausführung der Abbuchung informiert.

Es folgt die Aufbuchung des zu übertragenden Geldbetrages auf das Konto des Geldempfängers, bei dem es sich um ein Prepaid-Konto, ein Realtime-Account oder ein normales Bank-Girokonto handeln kann. Dieser Vorgang ist nicht zeitkritisch, muß aber mit höchster Zuverlässigkeit erfolgen. Auch hierbei sind die oben für das Abbuchen erwähnten Varianten zu unterscheiden - je nachdem, ob das Konto auf einem fremden Server geführt wird oder nicht. Auch für den Aufbuchungsvorgang wird ein Log-Record erstellt und Geldempfänger und Geldsender können unmittelbar nach Ausführung informiert werden.

Die Ausführung der Erfindung ist nicht auf die erwähnten Beispiele, Varianten und Aspekte beschränkt, sondern im Rahmen der Ansprüche ebenso in einer Vielzahl von Abwandlungen möglich, die im Rahmen fachgemäßen Handelns liegen. Insbesondere sind die oben beschriebenen Verfahrensschritte auch in anderer Reihenfolge möglich.

## Patentansprüche

1. Verfahren zur Übertragung eines elektronischen Geldbetrages aus einem Guthabenspeicher eines Geldsenders, der insbesondere ein vorausbezahltes Guthaben aufweist, auf ein Konto bzw. in einen Guthabenspeicher eines Geldempfängers über ein Telekommunikations- und Datennetz in Echtzeit, mit den Schritten:
- Subskription eines Geldübertragungs-Dienstes durch den Geldempfänger bei einem Dienstbetreiber unter Speicherung eines Geldempfänger-Datensatzes, der mindestens eine Transaktions-Rufnummer eines Endgerätes des Geldempfängers im Telekommunikationsnetz und einen Konto-Identifikator des Kontos bzw. Guthabenspeichers des Geldempfängers umfaßt, in einer Transaktions-Datenbasis,
- Speicherung eines Geldsender-Datensatzes, der mindestens eine Rufnummer eines Endgerätes, einen Konto-Identifikator des Guthabenspeichers und einen Authentisierungsdatensatz des Geldsenders umfaßt, in der Transaktions-Datenbasis oder einer Guthabenverwaltungs-Datenbasis,
- Aufbau einer Verbindung zwischen dem Endgerät des Geldsenders und einem Transaktions-Server des Dienstbetreibers, insbesondere aufgrund eines Teiles der Transaktions-Rufnummer,
- Eingabe des zu übertragenden Geldbetrages am Endgerät des Geldsenders und Übermittlung an den Transaktions-Server,
- Auslesen aus der Transaktions-Datenbasis und Auswertung des Geldempfänger-Datensatzes und des Geldsender-Datensatzes durch den Transaktions-Server, einschließlich Herstellung optional erforderlicher Datenverbindung(en) zu einer oder mehreren externen Anwendung(en),
- Prüfung der Deckung des Geldbetrages im Geldsender-Guthabenspeicher und Reservierung des Geldbetrages im Deckungsfall bzw. Abbruch mit Signalisierung im Unterdeckungsfall,
- Abbuchung des Geldbetrages aus dem Geldsender-Guthabenspeicher und Dokumentation derselben,
- Aufbuchung des Geldbetrages auf das Geldempfänger-Konto bzw. den Geldempfänger-Guthabenspeicher und Dokumentation derselben,
- Übermittlung einer Information über die Ab- und/oder die Aufbuchung an das Endgerät des Geldempfängers und insbesondere auch an das Endgerät des Geldsenders.

2. Verfahren nach Anspruch 1,
**dadurch gekennzeichnet, daß**
die Verbindung zum Transaktions-Server originär vom Endgerät des Geldsenders aus durch die Anwahl der Transaktions-Rufnummer des Endgerätes des Geldempfängers hergestellt und der zu übertragende Geldbetrag im Zusammenhang mit der Transaktions-Rufnummer eingegeben wird.

3. Verfahren nach Anspruch 1,
**dadurch gekennzeichnet, daß**
die Verbindung zum Transaktions-Server originär vom Endgerät des Geldempfängers aus hergestellt wird, wobei ein Verbindungsaufbau zum Endgerät des Geldsenders zwischengeschaltet ist und die Eingabe des Geldbetrages an dem letzteren erfolgt.

4. Verfahren nach einem der vorangehenden Ansprüche,
**dadurch gekennzeichnet, daß**
der Authentisierungsdatensatz im Geldsender-Datensatz einen Authentisierungscode umfaßt und vor dem Schritt der Abbuchung Schritte zur Autorisierung derselben ausgeführt werden, nämlich die Schritte:
- Eingabe des Authentisierungscodes durch den Geldsender an seinem Endgerät,
- Übermittlung derselben zum Transaktions-Server und
- Vergleich der übermittelten mit den im Geldsender-Datensatz vorliegenden Daten und Ausgabe eines Abbuchungs-Freigabesignals bei Übereinstimmung bzw. eines Abbuchungs-Sperrsignals bei Nichtübereinstimmung.

5. Verfahren nach Anspruch 4,
**dadurch gekennzeichnet, daß**
die Schritte zur Autorisierung bei einem einen vorbestimmten Schwellwert übersteigenden Geldbetrag ausgeführt werden, welcher insbesondere durch den Dienstbetreiber oder den Geldsender einstellbar ist.

6. Verfahren nach einem der vorangehenden Ansprüche; **gekennzeichnet durch**
die Ausführung unter Herstellung einer Datenverbindung zu mindestens einem externen Server, auf dem der Geldsender-Guthabenspeicher und/oder das Geldempfänger-Konto bzw. der Geldempfänger-Guthabenspeicher verwaltet werden, wobei der Konto-Identifikator des Geldempfänger-Datensatzes und/oder der Konto-Identifikator des Geldsender-Datensatzes eine Serveradresse oder -rufnummer umfaßt und der Transaktions-Server sich mit dieser bzw. diesen nach dem Schritt des Auslesens des Geldempfänger-Datensatzes und des Geldsender-Datensatzes zur Ausführung der nachfolgenden Schritte verbindet.

7. Verfahren nach einem der vorangehenden Ansprüche,
**dadurch gekennzeichnet, daß**
die Subskription des Geldempfängers beim Dienstbetreiber mit einer Mehrzahl von Konten und/oder Rufnummern erfolgt, wobei insbesondere die Anzahl der Konten kleiner als die der Rufnummern ist, und wobei alle entsprechenden Konto-Identifikatoren und die Rufnummern im Geldempfänger-Datensatz gespeichert werden.

8. Anordnung zur Übertragung eines elektronischen Geldbetrages aus einem Guthabenspeicher eines Geldsenders, der insbesondere ein vorausbezahltes Guthaben aufweist, auf ein Konto bzw. in einen Guthabenspeicher eines Geldempfängers über ein Telekommunikations- und Datennetz in Echtzeit, insbesondere zur Durchführung des Verfahrens nach einem der vorangehenden Ansprüche, welche aufweist:
- mindestens einen Kontoführungs-Server mit einem Geldsender-Guthabenspeicher und einem Geldempfänger-Konto- bzw. -Guthabenspeicher,
- ein an das Telekommunikations- und Datennetz angeschlossenes Endgerät des Geldempfängers, dem eine spezielle Transaktions-Rufnummer zugeordnet ist,
- ein an das Telekommunikations- und Datennetz angeschlossenes Endgerät des Geldsenders
- eine Transaktions-Datenbasis eines Dienstbetreibers, in der ein Geldempfänger-Datensatz, der mindestens die Transaktions-Rufnummer des Endgerätes des Geldempfängers und insbesondere auch einen Konto-Identifikator des Kontos bzw. Guthabenspeichers umfaßt, und ein Geldsender-Datensatz gespeichert sind, der die Rufnummer eines Endgerätes des Geldsenders und insbesondere auch einen Konto-Identifikator des Guthabenspeichers und einen Authentisierungsdatensatz umfaßt, und
- einen Transaktions-Server, der mit der Transaktions-Datenbasis verbunden und mit dem Endgerät mindestens des Geldsenders sowie dem Kontoführungs-Server oder den Kontoführungs-Servern verbindbar oder mit letzterem bzw. letzteren integral ausgeführt ist, zum Auslesen und zur Auswertung des Geldempfänger-Datensatzes und des Geldsender-Datensatzes aus der Transaktions-Datenbasis sowie zur Herstellung optional erforderlicher Datenverbindung(en) zu einer oder mehreren externen Anwendung(en) und zur Steuerung einer Deckungsprüfung im Geldsender-Guthabenspeicher sowie einer Abbuchung von diesem und einer Aufbuchung auf das Geldempfänger-Konto bzw. den Geldempfänger-Guthabenspeicher.

9. Anordnung nach Anspruch 8,
**dadurch gekennzeichnet, daß**
die Transaktions-Datenbasis und der Geldsender-Guthabenspeicher und/oder der Geldempfänger-Guthabenspeicher auf dem Transaktions-Server implementiert sind.

10. Anordnung nach Anspruch 8 oder 9,
**dadurch gekennzeichnet, daß**
der Transaktions-Server Mittel zur Dokumentierung eines Abbuchungsvorganges und eines Aufbuchungsvorganges, insbesondere als Log-Record, aufweist.

11. Anordnung nach einem der Ansprüche 8 bis 10,
**dadurch gekennzeichnet, daß**
dem Transaktions-Server Telekommunikationsmittel zur Signalisierung eines Transaktionsabbruches oder einer Abbuchung und/ oder einer Aufbuchung an das Endgerät des Geldsenders und insbesondere auch an das Endgerät des Geldempfängers zugeordnet sind.

12. Anordnung nach einem der Ansprüche 8 bis 11,
**dadurch gekennzeichnet, daß**
das Telekommunikations- und Datennetz ein Mobilfunknetz umfaßt, wobei insbesondere das Endgerät des Geldsenders als Mobilfunk-Endgerät oder mit einem Mobilfunkteil ausgerüstetes Datenverarbeitungsgerät ausgebildet ist.

13. Anordnung nach einem der Ansprüche 8 bis 12, **gekennzeichnet durch**
eine Mehrzahl von beim Dienstbetreiber registrierten Endgeräten des Geldempfängers, deren Transaktions-Rufnummern in dem Geldempfänger-Datensatz gespeichert sind.
